# EUROPÄISCHE PATENTANMELDUNG

(11) **EP 2 628 462 A1**
(43) Veröffentlichungstag der Anmeldung: **21.08.2013**
(21) Anmeldenummer: 13000529.1
(22) Anmeldetag: 01.02.2013
(51) Int. Cl.: A61C 15/00

(54) **Dentalgerätesatz**

(30) Priorität: 10.02.2012 DE 102012002499
(71) Anmelder: SOLO-MED GmbH, 54290 Trier (DE)
(72) Erfinder: Petersen, Ralf, 54295 Trier (DE)
(74) Vertreter: Börjes-Pestalozza, Heinrich

(57) **Zusammenfassung**

Die Erfindung betritft einen zur Reinigung und Diagnose verwendeten Dentalgerätesatz (1) mit einer Mehrzahl von Interdentalraumbürsten (2). Um einen Dentalgerätesatz (1) zur Verfugung zu haben, welcher qualifizierten Personen die Auswahl einer Anzahl von Interdentalraumbürsten (2) aus dem Dentalgerätesatz (1) erleichtert und derart dem Patienten ein optimales Reinigungsergebnis für seine unterschiedlichen Zahnzwischenräume (9) gestattet, wird vorgeschlagen, jedem der Zahnzwischenräume (9) des Patientengebisses wenigstens eine Interdentalraumbürste des Dentalgerätesatzes zuzuordnen, deren Borsten (4) mit einer Borstenlänge vorgesehen sind, bei welcher die Borsten im Innern des betreffenden Zahnzwischenraums (9) aus ihrer Ruhestellung in eine Gebrauchsstellung gebogen sind und sich die Orientierung der jeweiligen Gebrauchsstellung einer Mehrzahl von Borsten (4) bei Änderung der Bewegungsrichtung der Bürste (2) in dem Zahnzwischenraum (9) ändert, wobei bei gegebener Gängigkeit der Interdentalraumbürste (2) mit einer durch diese ausgeführten Hin- und Herbewegung die Borsten (4) jeden Raumpunkt des Zahnzwischenraums (9) beaufschlagen und/oder reinigen.

## Beschreibung

Die Erfindung betrifft einen Dentalgerätesatz mit einer Mehrzahl von Interdentalraumbürsten, welche Bürsten jeweils ein Bürstenteil zur Einführung in den Zahnzwischenraum sowie ein Griffteil zur Bedienung der Bürste aufweisen, wobei die Bürstenteile jeweils mit einem Träger versehen sind, von welchem eine Anzahl von Borsten in Ruhestellung in im wesentlichen radialer Richtung absteht.

Das allgemeine Wohlfinden ist heutzutage zu einem nicht geringen Teil an die Zahngesundheit gekoppelt. Deren Fehlen wiederum kann mit nicht unerheblichen Schmerzen, Unwohlsein oder dergleichen Einschränkungen verbunden sein, die aber auch ästhetischer Art, etwa bei Zahnverlust, sein können. Dass diese Einschränkungen auftreten können, liegt dabei häufig nicht einmal an mangelnder Hygienebereitschaft der betreffenden Personen, sondern meist daran, dass diese Bereitschaft in die Reinigung der "falschen" Stellen des Mundinnenraums investiert wird. Gewisse Flächen an den Zähnen unterliegen nämlich einer Art Selbstreinigung, so dass zu deren Gesunderhaltung ein bei weitem geringerer Einsatz als der tatsächlich betriebene aufzuwenden wäre. Demgegenüber sind der ganz überwiegende Teil der für Karies und Parodontopathien zuständigen Bakterien, auf deren effektive Beseitigung es gerade ankäme, in nur schwer zugänglichen Zahnzwischenräumen angesiedelt. Eine effektive Prophylaxe muss also zur Beseitigung dieser Bakterien bei der Zahnzwischenraumreinigung ansetzen.

Zur Beseitigung von Essensresten in Zahnzwischenräumen dienen bekanntermaßen Zahnstocher, auch Zahnseide kommt bei Patienten zuweilen zum Einsatz, wird aber als in der Handhabung schwierig empfunden und führt keineswegs zum gewünschten Reinigungsergebnis, da der Zahnzwischenraum bei Abstützung des Zahnseidenstrangs ein- und ausgangs des Zahnzwischenraums nur ungenügende Reinigung erfährt. Zu einer Verbesserung der Reinigung der Zahnzwischenräume ist in der EP 0 277 156 B1 bereits die Beflockung von Zahnstocherenden vorgeschlagen worden, als deren konsequente Weiterentwicklung am Ende die Interdentalraumbürste steht, die jedenfalls von allen Reinigungsgeräten die höchste Akzeptanz beim Patienten aufweist.

Zügig setzte sich zu diesen Bürsten die Erkenntnis durch, dass sowohl die unterschiedlichen physiologischen Gegebenheiten von Patient zu Patient, als auch hinsichtlich der Unterschiedlichen Zahnzwischenräume eines Patienten eine Auswahl von Bürsten aus einem Satz notwendig sei, um alle Zahnzwischenräume zu reinigen, wofür in der EP 0 892 625 B1 ein Sondiergerät vorgeschlagen wurde, um professionellen Hilfspersonen diese Auswahl zu ermöglichen. Anhand der vorgeschlagenen Messmethode darf jedoch bezweifelt werden, ob hieraus die Wahl der jeweils "richtigen" Interdentalraumbürste für den betreffenden Zahnzwischenraum resultiert, da der Patient zum einen angehalten würde, die Größe der Bürste an der falschen Stelle, nämlich der Eingangsöffnung des Zahnzwischenraums, zu bestimmen, zum anderen aus Komfortgründen fast sicher eine falsche, also zu kleine Bürste wählt, wie Untersuchungen zeigen. Die Auswahl der für den jeweiligen Zahnzwischenraum optimal passenden Interdentalraumbürste sollte daher qualifizierten Personen wie Zahnärzten oder geschultem Prophylaxe-Personal vorbehalten sein, welches sich zur gleichen Zeit einen Überblick über den Status des Patientengebisses verschaffen können soll.

Es besteht daher die Aufgabe, einen Dentalgerätesatz zur Verfügung zu stellen, welcher qualifizierten Personen die Auswahl einer Anzahl von Interdentalraumbürsten aus dem Dentalgerätesatz erleichtert und derart dem Patienten ein optimales Reinigungsergebnis für seine unterschiedlichen Zahnzwischenräume zu gestatten und der qualifizierten Person eine Möglichkeit zur Verfügung stellt, das Risiko des Patienten hinsichtlich der Schädigung seines Gebisses einzuschätzen.

Diese Aufgabe wird gelöst durch einen Dentalgerätesatz der eingangs genannten Art, bei welchem jedem der Zahnzwischenräume des Patientengebisses wenigstens eine Interdentalraumbürste des Dentalgerätesatzes zuordenbar ist, deren Borsten oder Filamente mit einer Länge vorgesehen sind, bei welcher die Borsten im Innern des betreffenden Zahnzwischenraums aus ihrer Ruhestellung in eine Gebrauchsstellung gebogen sind und sich die Orientierung der jeweiligen Gebrauchsstellung einer Mehrzahl von Borsten bei Änderung der Bewegungsrichtung der Bürste in dem Zahnzwischenraum ändert, und bei welchem bei gegebener Gängigkeit der Interdentalraumbürste mit einer durch diese ausgeführten Hin- und Herbewegung die Borsten jeden Raumpunkt des Zahnzwischenraums beaufschlagen und/oder reinigen. Die Hin- und Herbewegung der Bürste kann durch den Anwender natürlich auch wiederholt ausgeführt werden.

Aus den mit dem Dentalgerätesatz zur Verfügung stehenden.Interdentalraumbürsten soll also eine Auswahl unterstützt werden, denn bliebe die benutzte Bürste immer dieselbe, wäre bei stetig größer werdenden Zwischenräumen der Widerstand gegen Einführung der Bürste zunächst eventuell zu groß, als dass diese in den Zahnzwischenraum hineinpasste. Je größer aber die Zwischenräume würden, um so weniger Druck müsste aufgewendet werden (die Gängigkeit stiege also), bis die Bürste schließlich zu klein geworden wäre, um noch eine Reinigungswirkung zu haben (die Effektivität der Reinigung sinkt bis auf 0%). Bei einem bestimmten Verhältnis von Gängigkeit zu Effektivität wird vollständige Reinigung, ohne Schädigung möglich. Bei sehr kleinen Zwischenräumen wird der aufzuwendende starke Druck Schäden an Zahnfleisch und Zähnen zur Folge haben. Erst ab einem bestimmten Punkt wird ein leicht überschüssiger Druck keine Schäden mehr erzeugen. Zwar wird das Zahnfleisch bei Benutzung solcher Interdentalbürsten unmerklich und auch nur kurzfristig blutleerer als nötig, dies bleibt aber bei sorgfältiger Auswahl der Interdentalbürsten ohne dauerhafte Folgen.

Daher besteht die Kunst der Auswahl der optimalen Interdentalbürste darin, für einen bestimmten Zwischenraum genau die Bürste auszusuchen, die, ohne zu viel Druck auszuüben, alle Bakterien beseitigt. Ist eine Bürste zu groß, wird es zu Schädigungen zuerst am Zahnfleisch und später an den Zähnen kommen. Ist eine Bürste zu klein, werden nicht alle Bakterien beseitigt, es wird zu Karies und Parodontitis kommen. Hier kommt der sorgfältige Aufbau der Interdentalraumbürste zum Tragen, deren durch die Orientierungsänderung der Borsten entstehender Federeffekt einen mehr oder weniger großen Bereich der Gängigkeit der Bürste in einem Zahnzwischenraum abdeckt. Hierbei handelt es sich um die sogenannte "Therapeutische Breite" der Bürste, die denjenigen Gängigkeitsbereich bezeichnet, in welchem ein optimales Reinigungsergebnis erreicht wird.

Da Zahnzwischenräume auch im Hinblick auf den durch sie gebildeten Durchgriff durch die Zahnreihe sowohl hinsichtlich verschiedener Patienten als auch hinsichtlich eines einzelnen Gebisses keineswegs gleichförmig ausgebildet sind, ist es bei einer anderen Ausführung des Dentalgerätesatzes vorgesehen, dass die Interdentalraumbürsten ihre Hin- und Herbewegung im wesentlichen entlang einer durch den Träger gebildeten Längsachse ausführen oder der Trägerverlauf an einen gekrümmten Bewegungspfad anpassbar ist. Der Träger kann hierfür durch den Anwender beispielsweise vorgebogen werden, um einen gekrümmten Verlauf des Zahnzwischenraums nachzuempfinden und die Führung der Bürste an dem Griffteil und damit die Reinigung zu erleichtern.

Eine gezielte Auswahl von Bürsten, die auf eine für den Anwender/Patienten angenehme Minimalzahl beschränkt ist, so dass ihr Einsatz nicht schnell als lästig empfunden wird, kann mit einer anderen Ausführung erreicht werden, bei der die Interdentalraumbürsten des Dentalgerätesatzes in Abmessungen von Borsten und Trägern derart abgestimmt sind, dass sie in dem jeweils zugeordneten Zahnzwischenraum in einem Bereich zwischen 0% und 100% gängig sind und in einem überwiegenden Teil dieses Gängigkeitsbereichs in dem Zahnzwischenraum schädigungsfrei ein im wesentlichen vollständiges Reinigungsergebnis erzielen, was bedeutet, dass die Bakterienbesiedlung der jeweiligen Zahnzwischenräume effektiv entfernt wird. Dies kann am besten durch Kombination der Verwendung eines möglichst dünnen, aber stabilen Drahtes als Träger mit einer großen Borstenlänge (entspricht einem großen Bürstendurchmesser) von feinen und weichen Borsten erreicht werden, also insbesondere einer Kombination, bei welcher die Borstenlänge groß gegenüber der Breite des Trägers ist.

Bei einer besonders bevorzugten Ausführung sind zur Sicherstellung einer möglichst treffergenauen und schnellen Auswahl der für den einzelnen Patienten richtigen Bürsten die Interdentalbürsten des Dentalgerätesatzes derart in einer Reihe aufeinander abgestimmt sind, dass jede von diesen mit Ihrem Gängigkeitsbereich den Gängigkeitsbereich ihres einen (im Falle der ersten oder letzten Bürste des Satzes) oder ihrer beiden nächsten Reihennachbarn soweit überlappt, dass mit diesen Nachbarn zumindest in einem Teilbereich der jeweiligen Überlappung ein in etwa gleichwertiges Reinigungsergebnis erzielbar ist. Bei dem erfindungsgemäßen Dentalgerätesatz führt also die hohe Therapeutische Breite der einzelnen Bürsten zusammen mit ihrer innerhalb der Reihe dichten, überlappenden Ausbildung dazu, dass er alle seine Zahnzwischenräume mit einer Minimalzahl von Bürsten und trotzdem gegebener hoher Reinigungseffektivität reinigen und pflegen kann.

Bei einer bevorzugten Ausführung des Dentalgerätesatzes sind die Interdentalraumbürsten derart in der Reihe aufeinander abgestimmt, dass die Anzahl n einer zur effektiven Reinigung aller Zahnzwischenräume eines Patientengebisses zu treffenden Auswahl kleiner als deren maximale Anzahl *nₘₐₓ* ist, insbesondere beträgt der Wert von n hierbei zwischen eins und vier.

Für eine einfache Anwendung durch den Patienten, etwa auch in alltäglichen Situationen, wie beispielsweise im Anschluss an eine Mahlzeit, könne die Interdentalraumbürsten zweckmäßiger weise einfach handhabbar vorgesehen sein, weswegen eine Weiterbildung des Dentalgerätesatz darin besteht, bei den Interdentalraumbürsten die Längsachse des Trägers des Bürstenteils parallel zur Längsachse des Griffteils anzuordnen, insbesondere deren Achsen zusammen fallen zu lassen, so dass eine beispielsweise händische Betätigung der Bürste immer unmittelbar und direkt auch in eine Bewegung des Trägers mit den Borsten umgesetzt wird. Auch ist mit solchen, einfach an einem Griffteil zu ergreifenden und zu führenden Bürsten eine Reinigung der Zahnzwischenräume in der Regel sowohl aus oraler wie aus auch vestibulärer Richtung möglich, wobei die Handhabung aus einer, bevorzugt der vestibulären Richtung in der Regel ausreichend ist.

Eine andere vorteilhafte Ausgestaltung des Dentalgerätesatz kann es vorsehen, dass bei den Interdentalraumbürsten das Griffteil in einem dem Träger abgewandten Bereich ein Kupplungsmittel, etwa eine Steck- oder Rastverbindung, zur Anordnung eines Führungsteils aufweist, so dass beispielsweise ein abgewinkelter Stab an dem Griffteil angeordnet werden kann, um dem Anwender die Reinigung im Molarenbereich zu erleichtern. Für die verschiedenen Ausführungen müssen hierbei nicht notwendig die identischen Griffteile vorgesehen sein, beispielsweise kann eine eher für den händischen Gebrauch vorgesehenes Griffteil eine eher länglichen, schlanken, gut zu ergreifenden und zu führenden Griffteilkörper aufweisen, während bei zwar auch möglicher händischer Bedienung aber bevorzugter Anordnung an einem Stab einer eher kürzeren Körperform mit Fingermulde und abgewinkeltem Kupplungsstück der Vorzug einzuräumen wäre.

Einfach herstellbare Interdentalbürsten eines Dentalgerätesatzes weisen im wesentlichen allseitig von dem Träger abstehende Borsten in etwa gleicher Länge auf, so dass eine bevorzugte Weiterbildung darin bestehen kann, dass Einhüllende der von dem Träger abstehenden Borsten des Bürstenteils in etwa einen Zylinder bildet. Hierbei sind im Prinzip auch andere Ausbildungen denkbar, beispielsweise mit welliger Form, die durch Ausformungen des Trägers oder unterschiedliche Borstenlängen erzielbar wären, die Handhabbarkeit des kreisrunden Querschnitts hat jedoch auch dadurch Vorteile, dass sie keine zusätzlichen Überlegungen oder Fertigkeiten seitens des Anwenders/Patienten erfordert.

Als eine die Handhabbarkeit der Interdentalraumbürsten erleichternde, und damit die Patientenakzeptanz bei der Verwendung solcher Bürsten, die sogenannte "Compliance", verbessernde Maßnahme, kann es bei einer weiteren Ausführung des Dentalgerätesatzes zweckmäßig sein, im Bereich des dem Griffteil abgewandten freien Endes des Bürstenteils ein das Einführen in den jeweiligen Zahnzwischenraum erleichterndes Führungsmittel vorzusehen. Dieses Führungsmittels kann dergestalt vorgesehen sein, dass die Borsten oder das Filament im vorderen Bereich des Bürstenteils etwa biegsamer, kürzer oder mit verminderter Stärke, also geringerem Durchmesser ausgebildet sind. Hierdurch dringt das Bürstenteil einfacher in die Öffnung des Zahnzwischenraum ein und die Bürste erfährt insgesamt eine schnellere Führung und lässt sich nachfolgend als Ganzes besser führen, was im Umgang mit der Bürste als angenehm empfunden werden wird. Das an den freien Enden der Bürstenteile der Interdentalraumbürsten angeordnete Führungsmittel kann hierbei bevorzugt im Bereich derjenigen Borsten vorgesehen sein, die bei vollständiger Einführung der Bürste in den Zahnzwischenraum bereits in den Mundraum eintreten oder zumindest durch den Patienten mit seiner Zunge wahrgenommen werden können, und als solche von dem Reinigungsvorgang im wesentlichen ausgenommen sind. Dies ist auch insoweit sinnvoll, als diese Borsten dann ggf. auch für den Reinigungsvorgang zu weich ausgebildet sein können.

Um die Interdentalraumbürsten des Dentalgerätesatzes einerseits zunächst zuverlässig in die Zahnzwischenräume einführen und dort auch gegen mechanischen Widerstand eine effektive Reinigung gewährleisten zu können, ist bei einer vorteilhaften Ausführung der Träger aus einem biegesteifen Material vorgesehen. Dieses Material soll jedoch vorteilhaft möglichst auch bleibend verbiegbar ausgebildet sein, um auch schwierige Zahnzwischenräume, etwa mit innen höher liegender Papille, oder auch ansonsten nur äußert schwer erreichbare Stellen, wie Bi- oder Trifurkationen an parodontal stark geschädigten Molaren, zuverlässig reinigen zu können und hierfür den Träger beispielsweise durch Ziehen über den Daumen vorzubiegen. Dies kann zum Beispiel durch einen Träger aus einem auf spezielle Art legierten Chirurgiestahl gewährleistet werden, der fest verdreht ist. Dieser Stahl kann beispielsweise auch noch beschichtet sein, etwa mit einer Kunststoffschutzschicht. Bei entsprechenden Eigenschaften ist ein Träger auch aus anderem Material, etwa einem Kunststoff, denkbar.

Durch die starke Beanspruchung des Trägers durch die bei der Reinigung auftretenden Kräfte besteht die Gefahr, dass es zu einem Bruch insbesondere an der Übergangsstelle zwischen Träger und Griff kommt, weswegen es eine andere Ausführung des Dentalgerätesatzes vorsieht, dass bei den Interdentalraumbürsten der Träger in einer an einem Ende des Griffteils befindlichen Aufnahme aufgenommen ist, deren Querschnitt sich von der Öffnung der Aufnahme in Richtung des Griffteils verjüngt. Ein weiches Griffteilmaterial zumindest im Bereich des dem Träger zugewandten Endes des Griffteil mit der Öffnung sorgt darüber hinaus für eine genügende Bewegungsflexibilität, so dass die Interdentalraumbürsten bei der geschilderten hohen Festigkeit des Trägers entsprechend lange haltbar sind.

Um die Zuordnung der Interdentalraumbürsten innerhalb des Dentalgerätesatzes und nach deren Auswahl ihre wiederkehrend notwendige Identifikation zu erleichtern, können die Griffteile der Interdentalraumbürsten bei einer zweckmäßigen Weiterbildung eine größenkorrelierte Kodierung, insbesondere eine Farbkodierung aufweisen, wobei beispielsweise jeder Größe eine eigene Farbe zugeordnet ist. Die Kodierung kann hierbei beispielsweise auch in einer Nummerierung oder einer anderen Codeform der einzelnen Interdentalraumbürsten bestehen.

Überdies kann die Zuordnung von Interdentalraumbürsten, beispielsweise innerhalb eines Personenkreises erleichtert werden, wenn bei einer anderen Weiterbildung jede Interdentalraumbürste mit einem zumindest das Bürstenteil aufnehmenden Schutzmittel, insbesondere einer Schutzkappe, versehbar ist, welche dann, wie auch der Name sagt, das Bürstenteil bei Nichtgebrauch auch vor Verschmutzung und bei entsprechender Stabilität sogar vor Beschädigung schützt und in gleicher Art und Weise wiederum farbkodierbar oder nummerierbar ist.

Um auch an einer Lücke freiliegende, eigentlich einem Zahnzwischenraum zuzuordnende Flächen nur eines Zahnes oder palatinale Flächen an Endzähnen mit der durch den Patienten erlernten Technik reinigen können, kann es vorgesehen sein, dass bei einer Weiterbildung dem Dentalgerätesatz eine weitere Bürste zugeordnet ist, bei welcher der Träger, das Griffteil und/oder deren Verbindung zumindest bereichsweise derart versteift vorgesehen sind, dass auf eine Fläche eines einen Raum innerhalb der Mundhöhle einseitig alleine begrenzenden Zahnes über das Griffteil ein zur Reinigung führender Druck ausübbar ist.

Erlernt ein Patient die Prophylaxe der Zahnzwischenräume über die Anwendung des erfindungsgemäßen Dentalgerätesatzes, so ist das immer schon Therapie. Eine vorausgehende Diagnose erfolgt, indem es beim Aussuchen der für die Zwischenräume eines Patienten geeigneten Größen der Interdentalraumbürsten zu interdentalen Blutungsstellen kommt, die auf eine durch Bakterien hervorgerufene Entzündung hinweisen. Trägt man die Anzahl der vorhandenen Zwischenräume gegen die Anzahl der durch die passenden Interdentalraumbürsten hervorgerufenen interdentalen Blutungen auf, ergibt sich ein Index, der eine Aussage über das Erkrankungsrisiko des Patienten für Karies und Parodontitis erlaubt. Die vorstehende Aufgabe wird daher auch gelöst durch eine zweckmäßige Verwendung des erfindungsgemäßen Dentalgerätesatzes, bei welcher bei der Auswahl der für die verschiedenen Zahnzwischenräume passenden Interdentalraumbürsten durch Anwendung der jeweils passenden Interdentalraumbürste gegebenenfalls eine interdentale Blutungsstelle hervorgerufen wird und die Anzahl der Blutungsstellen im Verhältnis zur Anzahl der Zahnzwischenräume eine Abschätzung der Risikohöhe gestattet. Die betreffende interdentale Blutungsstelle tritt hierbei durch die Beaufschlagung des Zahnfleisches mit den Borsten auf. Bluten bei einem Erwachsenen mit normalerweise achtundzwanzig Zahnzwischenräumen alle achtundzwanzig, ist das Risiko, dass Karies und Parodontitis entstehen, sehr hoch, tritt jedoch, bei bestimmungsgemäßer Anwendung, demgegenüber keine Blutung auf, ist auch das Risiko verschwunden.

Werden die Interdentalraumbürsten des erfindungsgemäßen Dentalgerätesatzes als Diagnostikinstrumente eingesetzt, ändern sie ihre Funktion. Da einem Loch (einer Karies) in einem Zahn immer ein jahrelanger Krankheitsprozess vorrausgeht - einer Parodontitis (Knochenabbau, der zu Zahnverlust führt) sogar ein jahrzehntelanger Krankheitsprozess, von dem der Zahnarzt mit den bestehenden Diagnostikmethoden (visuell, sondieren und Röntgen-Bild) nur das Endstadium erkennen kann, ist Reparaturmedizin unausweichlich. Dass durch eine Reparatur nicht die Zahngesundheit wiederherstellt wird, sondern das nur ein entstandener Schaden repariert wurde, wird bei eben dieser Verwendung der Interdentalraumbürsten verdeutlicht, da sich der die Anzahl der Blutungsstellen durch die Reparatur nicht ändert, sondern gleich bleibt.

Um die zahnärztliche Diagnose der Interdentalräume zu erleichtern, kann es bei einer abgewandelten Verwendung des Dentalgerätesatzes vorgesehen sein, dass der Dentalgerätesatz eine reduzierte Gesamtanzahl nᵣ von Interdentalbürsten aufweist, wobei der Wert von wobei nᵣ 2, 3 oder 4 beträgt und die Abmessungen der Borsten des Bürstenteils und/oder des Trägers der Interdentalraumbürste an die diagnostische Verwendung angepasst ist. Die betreffende Anpassung kann etwa in einer geeigneten Wahl des Trägerdrahtes und/oder der Borstenlänge und/oder des Borstendurchmessers bestehen, die sich beide von vorne nach hinten auf einer Bürste ändern können. Dieser spezielle Satz von Interdentalraumbürsten ist in erster Linie nicht zur Reinigung/Therapie vorgesehen.

Möglich ist es auch, die Bürste mit einem Halter/Griff so zu verbinden, dass eine Art druckkalibrierte "Sonde" entsteht, die mechanisch, elektronisch oder computergestützt, die Größe eines Interdentalraumes bestimmbar macht. Hierbei bildet die Interdentalbürste also eine Messeinrichtung.

Die Erfindung wird nachstehend anhand von Ausführungsbeispielen in den Figuren der Zeichnung näher erläutert. In teilweise schematisierter Darstellung zeigen hierbei die
- Fig.1: Seitenansicht eines ersten Ausführungsbeispiels des erfindungsgemäßen Dentalgerätesatzes mit den zugehörigen Interdentalraumbürsten, bei welchen der Bürstendurchmesser von links nach rechts der Größe nach ansteigt;
- Fig.2a,b: Seitenansichten von Ausführungsbeispielen von Interdentalraumbürsten, die die Flexibilität des Bürstenteils (Fig.2a) und des Griffteils (Fig.2b) von Interdentalraumbürsten des Dentalgerätesatzes veranschaulichen;
- Fig.3: teilgeschnittene Draufsicht von oben auf einen Zahnzwischenraum, dem eine "falsche", weil zu kleine Interdentalraumbürste zugeordnet ist, die den Zahnzwischenraum nicht optimal reinigt;
- Fig.4: teilgeschnittene Draufsicht von oben auf einen Zahnzwischenraum, dem eine korrekte Interdentalraumbürste eines Dentalgerätesatz zugeordnet wurde, die den Zahnzwischenraum effektiv reinigt;
- Fig.5: geschnittene Seitenansicht eines Zahnzwischenraum, welchem wiederum eine für den gezeigten Zahnzwischenraum zu klein gewählte Interdentalraumbürste zugeordnet wurde;
- Fig.6: Darstellung der therapeutischen Breite von Interdentalraumbürsten als Effektivität der Reinigung über einen möglichst großen Gängigkeitsbereich der Bürste, bei welchem eine Reinigung ohne Schädigung des Zahnfleischs möglich ist;
- Fig.7: Auftragung von Effektivität gegen Gängigkeit bei zwei für dieselbe Zwischenraumgröße vorgesehenen Interdentalraumbürsten, die ersichtlich eine ganz unterschiedliche therapeutische Breite aufweisen;
- Fig.8: Darstellung einer optimalen therapeutischen Breite einer Interdentalraumbürste als möglichst großer Gängigkeitsbereich bei gleichbleibend optimaler Reinigungseffektivität bei gegebenem Zahnzwischenraum;
- Fig.9: Darstellung des Überlapps der therapeutischen Breite von aufeinander abgestimmten Interdentalraumbürsten bei anwachsenden Zahnzwischenräumen;
- Fig.10: Darstellung der therapeutischen Breite mehrerer Interdentalraumbürsten, welche bei anwachsenden Zahnzwischenräumen nicht überlappen;
- Fig.11: Darstellung des Überlapps der therapeutischen Breite bei anwachsender Zahnzwischenraumgröße für alle Interdentalraumbürsten des Dentalgerätesatzes;

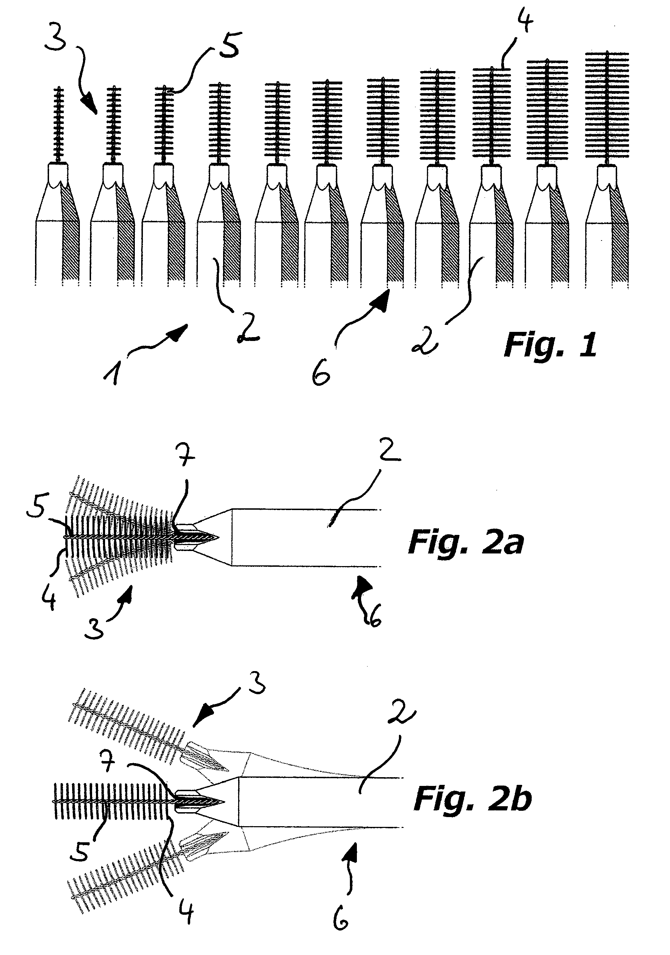

Die Fig.1 zeigt einen im Ganzen mit 1 bezeichneten Dentalgerätesatz, welcher mit der Anzahl von elf Interdentalraumbürsten 2 in der Lage ist, im wesentlichen jede denkbar vorkommende Zahnzwischenraumgröße eines Patientengebisses abzudecken, bzw. mit den von dem jeweiligen Träger 5 abstehenden Borsten 4 ihres Bürstenteils 3 zu beaufschlagen, um hiermit ein für den betreffenden Zahnzwischenraum optimales Reinigungsergebnis zu erzielen. Der Träger 5 des Bürstenteils 3 der Interdentalraumbürsten 2 ist hierbei jeweils an einem Griffteil 6 angeordnet, wobei der Träger 5 in Verlängerung der Längsachse des Griffteils 6 mit viereckigem Querschnitt liegt. Gut erkennbar ist auch, dass zur Erreichung einer vollständigen Reinigung der Zahnzwischenräume die Länge der Borsten 4, ggf. mit Ausnahme der Bürste für kleinste Zwischenräume, die Breite des Trägers 5 wesentlich überschreitet und in der gezeigten Ruhestellung die Borsten 4 im wesentlichen radial von dem Träger abstehen, wobei die Formulierung im wesentlichen hier bedeutet, dass die Bürsten natürlich nicht streng radial von dem Träger abstehen. Für den Betrachter nehmen von links nach rechts sowohl die Länge der Borsten 4 des Bürstenteils 3 als auch die Länge des den Zahnzwischenraum durchgreifenden Trägers zu.

Aus dem dargestellten Dentalgerätesatz 1 kann jedem der Zahnzwischenräume eines Patientengebisses wenigstens eine Interdentalraumbürste 2 zugeordnet werden, deren Borsten 4 mit einer Borstenlänge vorgesehen sind, bei welcher die Borsten im Innern des betreffenden Zahnzwischenraums aus ihrer Ruhestellung in eine Gebrauchsstellung gebogen sind und sich die Orientierung der jeweiligen Gebrauchsstellung einer Mehrzahl von Borsten bei Änderung der Bewegungsrichtung der Bürste in dem Zahnzwischenraum ändert, was dazu führt, dass bei gegebener Gängigkeit der Interdentalraumbürste 2 mit einer durch diese ausgeführten Hin- und Herbewegung die Borsten 4 jeden Raumpunkt des Zahnzwischenraums 9 beaufschlagen und reinigen. Dabei sind die Interdentalraumbürsten 2 des Dentalgerätesatzes 1 in Größe von Borsten 4 und Trägern 5 derart abgestimmt, dass sie in dem jeweils zugeordneten Zahnzwischenraum in einem Bereich zwischen 0% und 100% gängig sind und in einem überwiegenden Teil dieses Gängigkeitsbereichs in dem Zahnzwischenraum schädigungsfrei ein im wesentlichen vollständiges Reinigungsergebnis erzielen. Darüber hinaus sind über den gesamten Dentalgerätesatz 1 gesehen die Interdentalbürsten 2 derart in einer Reihe aufeinander abgestimmt, dass jede von diesen mit Ihrem Gängigkeitsbereich den Gängigkeitsbereich ihres einen oder ihrer beiden nächsten Reihennachbarn soweit überlappt, dass mit diesem oder diesen Nachbarn zumindest in einem Teilbereich der jeweiligen Überlappung ein in etwa gleichwertiges Reinigungsergebnis erzielt wird.

In den Fig.2a, 2b sind die Bewegungsmöglichkeiten der Interdentalraumbürsten 2 des Dentalgerätesatzes 1 dargestellt, wobei diese durch geschwächte Darstellungen der jeweiligen Bürste 2 mit dem Bürstenteil 3 in zwei ausgelenkten Stellungen angedeutet ist. Hierbei ist in der Fig.2a die durch die Flexibilität des Trägers 5 ermöglichte Bewegung gezeigt, welcher in der Aufnahme 7 des Griffteils 6 aufgenommen ist. Diese Aufnahme 7 weist einen sich kontinuierlich in Richtung des Bürstenteils 3 öffnenden, also konischen Querschnitt auf, wodurch die Knickwirkung des Öffnungsrandes auf den Träger reduziert ist. In der Fig.2b ist die Flexibilität des Griffteils 6 selbst für die dargestellte Bewegungsmöglichkeit verantwortlich.

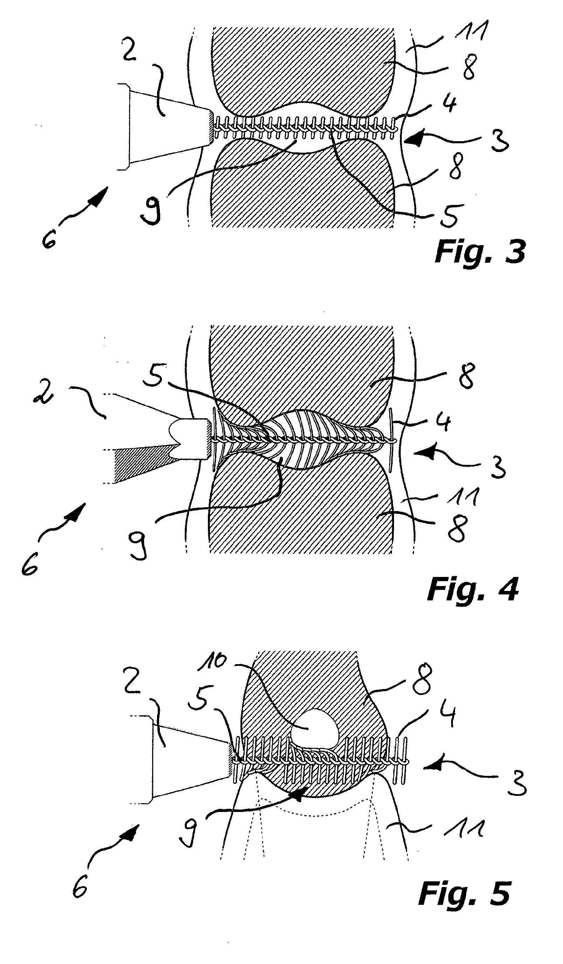

In der Fig.3 ist ein durch zwei Zähne 8 begrenzter Zahnzwischenraum 9 zu erkennen, in welchen eine Interdentalraumbürste 2 eingeführt ist, die aufgrund der durchaus vorhandenen Gängigkeit des Bürstenteils 3 in dem Zahnzwischenraum 9 subjektiv das Gefühl vermittelt, für den betreffenden Zwischenraum passend zu sein. Aufgrund fehlender Abstimmung ist sie jedoch viel zu klein für diesen, was daran zu erkennen ist, dass die in der Fig.2a für den Betrachter nach "oben" und nach "unten" verlaufenden Ausbauchungen des Zahnzwischenraums für die Borsten 4 des Bürstenteils 3 der Interdentalraumbürste nicht oder aber jedenfalls keineswegs vollständig erreichbar und damit zu reinigen sind.

Bei gleicher Gängigkeit wie derjenigen der Interdentalraumbürste 2 in der Fig.3 3 wurde in der Fig.4 dem betreffenden Zahnzwischenraum 9 demgegenüber eine passende, erfindungsgemäße Interdentalraumbürste 2 zugeordnet, deren Borsten die notwendige Länge haben, um jeden Raumpunkt des Zahnzwischenraums 9 zu erreichen und gleichzeitig die Borsten 4 des Bürstenteils 3 im Innern des betreffenden Zahnzwischenraums 9 aus ihrer Ruhestellung in eine Gebrauchsstellung gebogen sind. Die Orientierung der jeweiligen Gebrauchsstellung einer Mehrzahl von Borsten 4 ändert sich bei Änderung der Bewegungsrichtung der Bürste 2 in dem Zahnzwischenraum 9. Bei der gegebenen Gängigkeit der Interdentalraumbürste 2 beaufschlagen und reinigen die Borsten jeden Raumpunkt des Zahnzwischenraums mit einer durch die Interdentalraumbürste 2 ausgeführten Hin- und Herbewegung. Zu erkennen ist überdies, dass an den Mündungsstellen des Zahnzwischenraums 9 nach außen und zum Mundraum hin die Borsten 4 des Bürstenteils stärker gebogen oder gekrümmt sind als im Zahnzwischenraum 9 selbst.

In der Fig.5 ist, anders als bei der Darstellung von Molaren der Fig.3 und 4, ein Eckzahn (Caninus) 8 dargestellt, der mit einem dem Betrachter zugewandten Kontaktbereich 10 an den benachbarten (nicht dargestellten) Schneidezahn oder Prämolaren grenzt und durch das Zahnfleisch 11 und diesen Kontaktbereich 10 der Zahnzwischenraum 9 begrenzt ist. In diesen Zahnzwischenraum 9 ist erneut eine Interdentalraumbürste 2 eingeführt, die in der Lage ist, dem Patienten eine Reinigungswirkung zu vermitteln, diese Reinigung findet jedoch aber aufgrund fehlender Abstimmung der Borstenlänge nur unvollständig statt. Dies kann etwa vorkommen, wenn bei einem nicht abgestimmten Sortiment von Interdentalraumbürsten 2 eine der Bürsten gerade ein kleines Stück zu groß ist, um in den Zahnzwischenraum 9 hinein zu passen, und die gezeigte, nächst kleinere Größe zwar passt, dass aber die Borsten 4 nicht lang genug sind, um den Zahnzwischenraum 9 vollständig zu reinigen, wobei dieser Umstand gegebenenfalls sogar unentdeckt bleibt, da ja keine anderen, für den Zahnzwischenraum 9 passenden Bürsten 2 in diesem, nicht erfindungsgemäßen Dentalgerätesatz zur Verfügung stehen.

Den Fig.1, 2a, 2b und 5 kann insgesamt entnommen werden, dass in diesen bevorzugten Ausführungen der Interdentalraumbürsten 2 des Dentalgerätesatzes 1 die Einhüllende der von dem Träger 5 abstehenden Borsten 4 des Bürstenteils 3 in etwa einen Zylinder bildet, wobei die in den Figuren gezeigten, von dem Träger 5 abstehenden Borsten 4 eher schematisch im Sinne eines Borstenbündels feiner Borsten 4 zu verstehen ist, als als Einzelborste. Ebenso ist erkennbar, dass der speziell legierte Chirurgiestahl, aus welchem der Träger 5 ausgebildet ist, nach Art zweier Drähte um die Längsachse des Trägers 5 verdrillt ist, die Drähte also gegeneinander verwunden und schraubenförmig umeinander gewickelt sind, und die erwähnten Bündel von Borsten 4 in den durch die Windungen gebildeten Taschen oder Lücken gehalten ist. Die Ausbildung des Trägers 5 aus einem biegesteifen sowie bleibend verbiegbaren Material hilft hier zum einen bei der Formgebung des Trägers 5 an sich, zum anderen bei dessen Anpassung an gekrümmte Zahnzwischenräume 9.

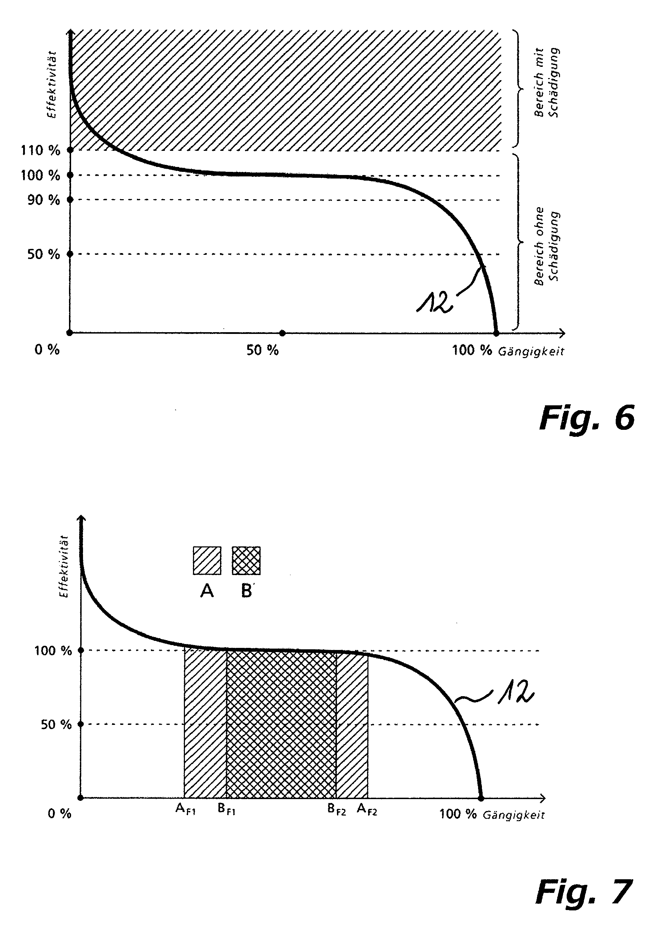

Für eine Interdentalraumbürste 2 bestimmter Größe ist in der Fig.6 der folgende Zusammenhang dargestellt: Als x-Achsen-Wert ist die Gängigkeit der Bürste in Zahnzwischenräumen 9 aufgetragen, so dass sich die dargestellte Effektivitätskurve 12 für von links nach rechts stetig größer werdende Zwischenräume ergibt und besagt, dass der Widerstand bei Einführung in den Zahnzwischenraum 9 zunächst zu groß ist. Mit größer werdenden Zwischenräumen 9 muss mit steigender Gängigkeit immer weniger Druck aufgewandt werden, bis die verwendete Bürste schließlich für die erreichte Zwischenraumgröße zu klein ist, um noch eine Reinigungswirkung zu haben, die Effektivität der Reinigung dementsprechend auf 0% sinkt. Während bei sehr kleinen Zahnzwischenräumen der auf die Bürste ausgeübte Druck zu Schädigungen des Zahnfleisches führt, wird ab einem bestimmten Punkt auf der Kurve 12 der Druck keine Schädigung mehr zeitigen, sondern den Zwischenraum optimal reinigen. Der Bereich mit Schädigung ist in Fig.6 schraffiert dargestellt, wobei die Auftragung der die 100% übersteigenden Werte der Y-Achse in der Fig.6 wie in den folgenden Diagrammen nicht streng mathematisch genommen werden darf.

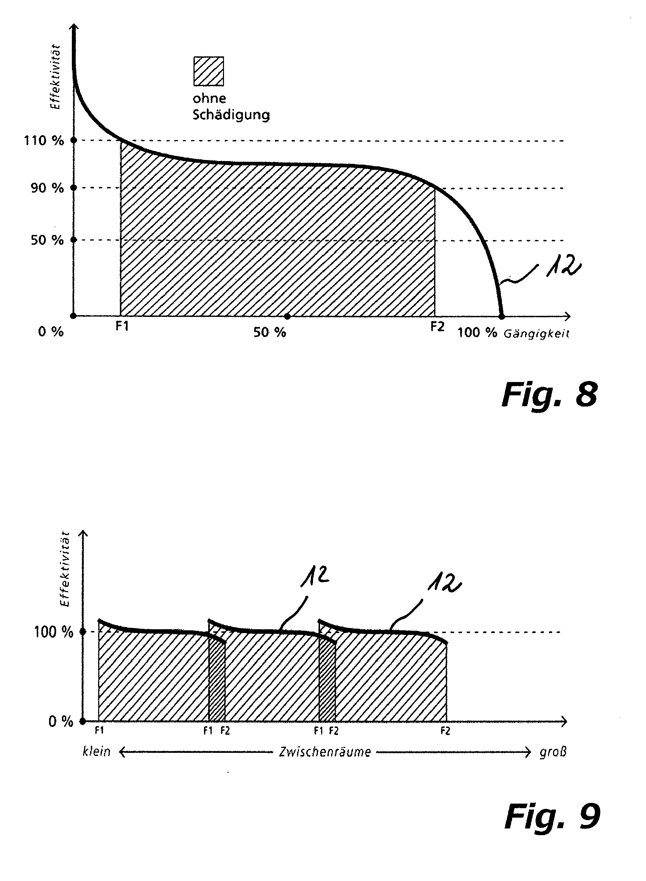

Wichtig ist es also, für jeden der Zahnzwischenräume 9 des Patienten diejenige Bürste auszuwählen, die ohne zuviel Druck den Zahnzwischenraum optimal von Bakterien reinigt. Den von der betreffenden Bürste 2 abgedeckten Bereich auf der Kurve 12 der Fig.6 kann man als therapeutische Breite bezeichnen. Dies wird zusätzlich anhand der Fig.7 deutlich, welche die therapeutische Breite zweier für die gleiche Zahnzwischenraumgröße vorgesehener Interdentalraumbürsten 2 zeigt, wobei Bürste A gegenüber Bürste B eine erheblich größere therapeutische Breite aufweist (erkennbar an den jeweiligen Abszissenwerten F1, F2), obwohl die Eignung für den gleichen Zahnzwischenraum 9 bei beiden Bürsten 2 vorhanden ist. Die besten Interdentalraumbürsten 2 haben dabei eine therapeutische Breite, die von der maximal möglichen Größe ohne Schädigungen (F1) bis etwa zur 90%-Marke (F2) der Fig. 8 reichen, da sie die für sie gedachten Zahnzwischenraumgrößen vollständig ohne Schädigungen reinigen, was auch bei knapp größeren oder knapp kleineren Zahnzwischenraum 9 noch gültig ist.

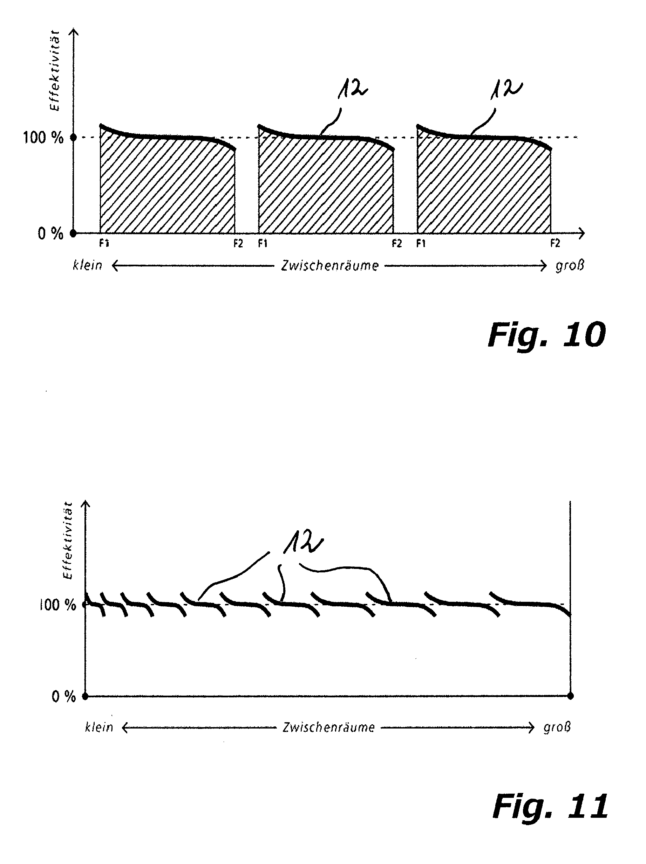

Ist der Zahnzwischenraum 9 jedoch merklich größer oder kleiner, so muss die nächst größere oder kleinere Bürste gewechselt werden. In der Fig. 9 ist zu erkennen, dass bei den abgebildeten Effektivitätskurven die Endwert F2 der Gängigkeit der dem kleineren Zahnzwischenraum 9 zugeordneten Interdentalraumbürste 2 höher liegt, als der Anfangswert F1 der dem größeren Zahnzwischenraum 9 zugeordneten Interdentalraumbürste 2, so dass also ein Überlapp erreicht wird, der keine Abszissenwerte ausnimmt und derart alle Zwischenraumgrößen optimal abgedeckt werden können. Dies gelingt gerade nicht bei Dentalgerätesätzen 1 nach dem Beispiel der Fig. 10, bei welchen ein unbefriedigendes Ergebnis insbesondere in dem Fall erzielt würde, dass der Patient gerade Zahnzwischenräume 9 aufwiese, welche genau in die von den Kurve 12 ausgelassenen Lücken fielen.

Eine sinnvolle Prophylaxe gelingt also mit einem Dentalgerätesatz 1, bei dem das empfindliche Gleichgewicht zwischen Effektivität und Gängigkeit der einzelnen Bürsten 2 richtig eingestellt ist und außerdem die therapeutischen Breiten der verschiedenen Bürstengrößen in einer Reihe präzise aufeinander abgestimmt sind, wie es etwa in Fig. 11 dargestellt ist, so dass jede der Interdentalraumbürsten 2 mit Ihrem Gängigkeitsbereich den Gängigkeitsbereich ihres einen oder ihrer beiden nächsten Reihennachbarn soweit überlappt, dass mit diesen Nachbarn im Bereich der jeweiligen Überlappung ein in etwa gleichwertiges Reinigungsergebnis erzielbar ist.

Die vorstehend beschriebene Erfindung betrifft demnach einen Dentalgerätesatz 1 mit einer Mehrzahl von zur Reinigung von Zahnzwischenräumen 9 eines Patientengebisses vorgesehenen Interdentalraumbürsten 2, welche Bürsten jeweils ein Bürstenteil 3 zur Einführung in den Zahnzwischenraum 9 sowie ein Griffteil 6 zur Bedienung der Bürste aufweisen, wobei die Bürstenteile 3 jeweils mit einem Träger 5 versehen sind, von welchem eine Anzahl von Borsten 4 in Ruhestellung in im wesentlichen radialer Richtung absteht. Um einen Dentalgerätesatz 1 zur Verfügung zu haben, welcher qualifizierten Personen die Auswahl einer Anzahl von Interdentalraumbürsten 2 aus dem Dentalgerätesatz 1 erleichtert und derart dem Patienten ein optimales Reinigungsergebnis für seine unterschiedlichen Zahnzwischenräume 9 gestattet, ist jedem der Zahnzwischenräume 9 des Patientengebisses wenigstens eine Interdentalraumbürste des Dentalgerätesatzes zuordenbar, deren Borsten 4 mit einer Borstenlänge vorgesehen sind, bei welcher die Borsten im Innern des betreffenden Zahnzwischenraums 9 aus ihrer Ruhestellung in eine Gebrauchsstellung gebogen sind und sich die Orientierung der jeweiligen Gebrauchsstellung einer Mehrzahl von Borsten 4 bei Änderung der Bewegungsrichtung der Bürste 2 in dem Zahnzwischenraum 9 ändert, wobei bei gegebener Gängigkeit der Interdentalraumbürste 2 mit einer durch diese ausgeführten Hin- und Herbewegung die Borsten 4 jeden Raumpunkt des Zahnzwischenraums 9 beaufschlagen und/oder reinigen.

## Patentansprüche

1. Dentalgerätesatz mit einer Mehrzahl Interdentalraumbürsten, welche Bürsten jeweils ein Bürstenteil zur Einführung in den Zahnzwischenraum sowie ein Griffteil zur Bedienung der Bürste aufweisen, wobei die Bürstenteile jeweils mit einem Träger versehen sind, von welchem eine Anzahl von Borsten in Ruhestellung in im wesentlichen radialer Richtung absteht, **dadurch gekennzeichnet, dass** jedem der Zahnzwischenräume (9) des Patientengebisses wenigstens eine Interdentalraumbürste (2) des Dentalgerätesatzes (1) zuordenbar ist, deren Borsten (4) mit einer Borstenlänge vorgesehen sind, bei welcher die Borsten (4) im Innern des betreffenden Zahnzwischenraums (9) aus ihrer Ruhestellung in eine Gebrauchsstellung gebogen sind und sich die Orientierung der jeweiligen Gebrauchsstellung einer Mehrzahl von Borsten bei Änderung der Bewegungsrichtung der Bürste (2) in dem Zahnzwischenraum (9) ändert, und dass bei gegebener Gängigkeit der Interdentalraumbürste (2) mit einer durch diese ausgeführten Hin- und Herbewegung die Borsten (4) jeden Raumpunkt des Zahnzwischenraums (9) beaufschlagen und/oder reinigen.

2. Dentalgerätesatz nach Anspruch 1, **dadurch gekennzeichnet, dass** die Interdentalraumbürsten (2) ihre Hin- und Herbewegung im wesentlichen entlang einer durch den Träger (5) gebildeten Längsachse ausführen oder der Trägerverlauf an einen gekrümmten Bewegungspfad anpassbar ist.

3. Dentalgerätesatz nach Anspruch 1 oder 2, **dadurch gekennzeichnet, dass** die Interdentalraumbürsten (2) des Dentalgerätesatzes (1) in Abmessungen von Borsten (4) und Trägern (5) derart abgestimmt sind, dass sie in dem jeweils zugeordneten Zahnzwischenraum (9) in einem Bereich zwischen 0% und 100% gängig sind und in einem überwiegenden Teil dieses Gängigkeitsbereichs in dem Zahnzwischenraum (9) schädigungsfrei ein im wesentlichen vollständiges Reinigungsergebnis erzielen.

4. Dentalgerätesatz nach einem der vorhergehenden Ansprüche, **dadurch gekennzeichnet, dass** die Interdentalbürsten (2) des Dentalgerätesatzes (1) derart in einer Reihe aufeinander abgestimmt sind, dass jede von diesen mit Ihrem Gängigkeitsbereich den Gängigkeitsbereich ihres einen oder ihrer beiden nächsten Reihennachbarn soweit überlappt, dass mit diesen Nachbarn im Bereich der jeweiligen Überlappung ein in etwa gleichwertiges Reinigungsergebnis erzielbar ist.

5. Dentalgerätesatz nach einem der vorhergehenden Ansprüche, **dadurch gekennzeichnet, dass** die Anzahl n einer zur effektiven Reinigung aller Zahnzwischenräume (9) eines Patientengebisses zu treffenden Auswahl von Interdentalraumbürsten (2) des Dentalgerätesatzes (1) kleiner als deren maximale Anzahl *nₘₐₓ* ist, insbesondere der Wert von n zwischen eins und vier beträgt.

6. Dentalgerätesatz nach einem der vorhergehenden Ansprüche, **dadurch gekennzeichnet, dass** bei den Interdentalraumbürsten (2) die Längsachse des Trägers (5) des Bürstenteils (3) parallel zur Längsachse des Griffteils (6) angeordnet ist, insbesondere die Achsen zusammen fallen.

7. Dentalgerätesatz nach einem der vorhergehenden Ansprüche, **dadurch gekennzeichnet, dass** das Griffteil (6) in einem dem Träger (5) abgewandten Bereich ein Kupplungsmittel, etwa eine Steck- oder Rastverbindung, zur Anordnung eines Führungsteils aufweist.

8. Dentalgerätesatz nach einem der vorhergehenden Ansprüche, **dadurch gekennzeichnet, dass** die Einhüllende der von dem Träger (5) abstehenden Borsten (4) des Bürstenteils (3) in etwa einen Zylinder bildet.

9. Dentalgerätesatz nach einem der vorhergehenden Ansprüche, **dadurch gekennzeichnet, dass** im Bereich des dem Griffteil (6) abgewandten freien Endes des Bürstenteils (3) ein das Einführen in den jeweiligen Zahnzwischenraum (9) erleichterndes Führungsmittel vorgesehen ist.

10. Dentalgerätesatz nach einem der vorhergehenden Ansprüche, **dadurch gekennzeichnet, dass** der Träger (5) aus einem biegesteifen und/oder bleibend verbiegbaren Material gebildet ist.

11. Dentalgerätesatz nach einem der vorhergehenden Ansprüche, **dadurch gekennzeichnet, dass** der Träger (5) in einer an einem Ende des Griffteils (6) befindlichen Aufnahme (7) aufgenommen ist, deren Querschnitt sich von der Öffnung der Aufnahme in Richtung des Griffteils (6) verjüngt.

12. Dentalgerätesatz nach einem der vorhergehenden Ansprüche, **dadurch gekennzeichnet, dass** die Griffteile (6) der Interdentalraumbürsten (2) eine größenkorrelierte Kodierung, insbesondere eine Farbkodierung, aufweisen und/oder jede Interdentalraumbürste (2) mit einem zumindest deren Bürstenteil (3) aufnehmenden Schutzmittel, insbesondere einer Schutzkappe, versehbar ist.

13. Dentalgerätesatz nach einem der vorhergehenden Ansprüche, **dadurch gekennzeichnet, dass** dem Dentalgerätesatz (1) eine weitere Bürste zugeordnet ist, bei welcher der Träger (5), das Griffteil (6) und/oder deren Verbindung zumindest bereichsweise derart versteift vorgesehen sind, dass auf eine Fläche eines einen Raum innerhalb der Mundhöhle einseitig alleine begrenzenden Zahnes (8) mittels des Griffteils (6) über die Borsten (4) ein zur Reinigung führender Druck ausübbar ist.

14. Verwendung eines Dentalgerätesatzes nach einem der vorangegangenen Ansprüche zur Beurteilung des Risikos von Karies und Parodontitis bei einem Patientengebiss, **dadurch gekennzeichnet, dass** bei der Auswahl der für die verschiedenen Zahnzwischenräume (9) passenden Interdentalraumbürsten (2) durch Anwendung der jeweils passende Interdentalraumbürste (2) gegebenenfalls eine interdentale Blutungsstelle hervorgerufen wird, und die Anzahl der Blutungsstellen im Verhältnis zur Anzahl der Zahnzwischenräume (9) eine Abschätzung der Risikohöhe gestattet.

15. Verwendung nach Anspruch 14, **dadurch gekennzeichnet, dass** der Dentalgerätesatz (1) eine reduzierte Gesamtanzahl nᵣ von Interdentalbürsten aufweist, wobei der Wert von wobei nᵣ 3 oder 4 beträgt und die Abmessungen der Borsten (4) des Bürstenteils (3) und/oder des Trägers (5) der Interdentalraumbürste (2) an die diagnostische Verwendung angepasst ist.
